# FASCICULE DE BREVET EUROPEEN

(11) **EP 2 963 438 B1**
(45) Date de publication et mention de la délivrance du brevet: **20.05.2020**
(21) Numéro de dépôt: 15174861.3
(22) Date de dépôt: 01.07.2015
(51) Int. Cl.: G01S 5/02, G01S 5/06, G01S 5/00

(54) **LOCALISATION D'UNE BALISE DE DETRESSE**
LOKALISIERUNG EINES NOTSIGNALSENDERS
LOCATION OF AN EMERGENCY BEACON

(30) Priorité: 04.07.2014 FR 1401510
(43) Date de publication de la demande: 06.01.2016
(73) Titulaire: THALES, 92400 Courbevoie (FR); Centre National d'Etudes Spatiales, 75039 Paris Cedex 01 (FR)
(72) Inventeur: CALMETTES, Thibaud Pierre Jean, 31100 TOULOUSE (FR); PETCU, Emanuela Ana Maria, 31100 TOULOUSE (FR); GREGOIRE, Yoan, 31401 TOULOUSE Cedex 9 (FR)
(74) Mandataire: Lucas, Laurent Jacques

(56) Documents cités:
- US-A1- 2013 106 656
- US-B1- 6 317 077
- US-B1- 7 817 092
- C. FERNÁNDEZ PRADES: "Advanced Signal Processing Techniques in Local User Terminals for Search & Rescue Systems Based on MEO Satellites", PROCEEDINGS OF ION-GNSS 2005, 13 septembre 2005 (2005-09-13), pages 579-585, XP055004019,

## Description

### Domaine de l'invention

L'invention concerne le domaine des communications par satellite et en particulier celui des méthodes et procédés pour la localisation d'une balise de détresse.

### Etat de la Technique

Une balise de détresse ou "radiobalise" de localisation des sinistres est un transmetteur qui émet un signal électromagnétique d'urgence (en anglais "burst") pour donner l'emplacement d'un navire, d'un avion ou d'une personne en détresse. Ce signal est reçu par un ou plusieurs satellites d'un réseau (par exemple Cospas-Sarsat ou GEOSAR) qui généralement retransmettent ce signal à des stations au sol qui déterminent la localisation de la balise et transmettent ses coordonnées au bureau de recherche ou de secours le plus proche.

Le signal peut contenir l'information de la position prise par GPS ce qui rend la localisation plus aisée. Dans d'autres situations, aucune information de position déclarée n'est transmise. Dans la plupart des cas, le grand nombre de balises commercialisées ne permet pas une association avec un identifiant unique avec chaque balise.

Dans le cadre du développement du système MEOSAR, réseau satellitaire de détresse pour la recherche et le sauvetage, dont la mise en service est fixée à 2018, de nombreuses stations de réception au sol MEOLUT doivent être développées et déployées. US 2013/106656 décrit un système MEOSAR avec l'introduction d'une modification dans le segment sol. Chaque signal (envoyé initialement par la balise de détresse) relayé par les satellites vers le segment sol est traité en supprimant le Doppler et le retard de trajet afin d'obtenir un signal combiné avec un meilleur SNR, améliorant ainsi la démodulation du signal de balise.

Un des problèmes techniques principaux du passage à MEOSAR est la dégradation du bilan de liaison par rapport à la version courante LEOSAR. Si le système LEOSAR (Low Altitude) a été dimensionné avec une marge suffisante pour permettre - malgré cette perte - un traitement MEOSAR, l'ensemble de cette marge devrait être absorbée par la modification du segment satellite alors qu'elle pourrait ou devrait normalement couvrir également les cas les plus critiques d'émission. Dans les faits, une antenne mal orientée et/ou manquant de puissance d'émission, ou bien encore une balise partiellement immergée risqueraient de ne pas être localisées à l'avenir.

A ce jour, plusieurs actions sont mises en place (ou sont prévues) pour minimiser les pertes liées au passage au MEOSAR: a) utilisation de grandes antennes de réception pour minimiser la contribution de la voie descendante (sachant que avec la charge utile SAR-P, il n'y a qu'une voie montante en contexte LEOSAR); b) amélioration globale de visibilité : la diversité géométrique permise par la visibilité permanente de nombreux satellites simultanés (au moins 8) conduit à dimensionner les contraintes de masque et de combinaison des gains d'antennes sur un cas plus favorable qu'en LEOSAR; c) amélioration de l'antenne satellite d) étude d'une nouvelle modulation plus performante (confer EWG Cospas/Sarsat)

Malgré tous ces éléments, la perte liée au passage au MEOSAR conduit à une dégradation de 10dB. De plus, un problème clé est le coût de l'antenne qui conduit à limiter très fortement le nombre de satellites poursuivis à typiquement 4 ou 5 (avec un maximum à 8 sur les stations MEOLUT les plus richement dotées, mais certaines au contraire n'ont que deux antennes) alors que 30 satellites sont typiquement visibles sur l'ensemble des constellations poursuivies.

Il existe un besoin industriel pour des procédés et des systèmes permettant des localisations à précision améliorée. La solution de la présente invention remédie aux inconvénients des approches classiques, au moins en partie.

### Résumé de l'invention

Il est divulgué un procédé mis en œuvre par ordinateur pour le traitement du signal émis par une balise de détresse selon la revendication 1.

La balise possède dans la réalité physique une position "vraie" (i.e. exacte), dont l'objet de la présente invention est précisément de déterminer les coordonnées de la manière la plus rapide et la plus précise possible.

A réception d'un signal émis par une balise, en première approximation, une première zone géographique à l'intérieur de laquelle la balise se trouve peut être déterminée. En définissant un certain pas de résolution (par exemple 5 km), un nombre fini de positions dans l'espace peut être défini: l'espace de recherche est discrétisé.

Un ensemble de positions "hypothétiques" ou "vraisemblables" ou "possibles" ou "candidates" ou "potentielles" est déterminé, de manière discrète et donc approchée. Dans la réalité, la balise de détresse pourra se trouver entre deux positions discrétisées. La position de la balise est précisée itérativement, quand est déterminé le(s) meilleur(s) point(s) de la grille.

Cet ensemble de position, selon différents modes de réalisation, correspond à une "grille" ou à une "matrice" ou à une "table" ou à une "maillage". Une vue logique ou abstraite considèrera en effet la liste des positions possibles comme des données de coordonnées, tandis qu'une vision géométrique pourra correspondre à un maillage régulier ou irrégulier. Par exemple, il est possible d'avoir un maillage irrégulier sur les positions (par exemple pour prendre en compte le resserrement des degrés de longitude quand la latitude augmente). De manière générale, un ensemble de positions hypothétiques est déterminé, quel que soit la dénomination sous-jacente de la représentation des coordonnées ainsi établie. L'ensemble des positions potentielles de la balise a *grille de positions* permet de discrétiser l'espace des possibles et de converger rapidement vers une position précise. Au-delà du sens littéral, dans un mode de réalisation particulier, la grille de positions peut être obtenue au moyen de la génération d'un ensemble fini de coordonnées géographiques auxquelles la balise est susceptible de se trouver (par exemple en première approximation). Le "pivot" de la localisation est donné par la liste des positions dans la grille. Une grille de positions est par exemple une grille de 1° x 1° en latitude et en longitude. En considérant la planète tout entière, 180 x 360 soit 64800 points peuvent être obtenus. En se limitant aux points visibles depuis la station, ce nombre de positions peut être divisé par 5 (le nombre exact dépend de la latitude), soit 13000 points environ.

Selon un aspect de l'invention une *"intégration cohérente"* des signaux des satellites est réalisée en une position hypothétique (ou point de la grille de positions). Empruntée au domaine technique des signaux GNSS, cette *"intégration cohérente"* correspond, dans un mode de réalisation particulier, à la "somme des signaux décalés" des satellites. Les signaux sont décalés ("relativement"), i.e. les uns par rapport aux autres (selon l'hypothèse de position d'émission). Le décalage *relatif* entre les signaux est pris en compte (et non pas le décalage absolu).

La "recherche vectorielle" - qui est alors entreprise - désigne l'opération consistant à parcourir cet ensemble de positions ou grille de positions pour obtenir une intégration cohérente valide, au lieu de chercher dans l'ensemble des décalages en temps et en fréquence possible entre tous les satellites ce qui créerait une combinatoire trop grande.

L'évaluation de "validité" (ou de "qualité" de la somme) peut être effectuée de différentes manières, les développements suivants donnant différentes solutions d'implémentation. De manière générale, la validité du signal sommé (i.e. des signaux décalés) peut être quantifiée, d'où le terme d'évaluation impliquant l'association à différentes valeurs. Cette évaluation ou quantification peut par exemple être effectuée en fonction de la présence - ou a contrario de l'absence - d'un signal prédéfini ou connu (i.e. présence d'une certaine caractéristique dans le signal sommé). Si une caractéristique prédéfinie et/ou connue est absente (e.g. sous un certain seuil de valeur prédéfini, éventuellement configurable), l'hypothèse de position (i.e. selon laquelle un signal a été émis depuis la position particulière hypothétique de la grille de positions) est abandonnée pour le point de la grille considéré et le procédé est itéré. Si une caractéristique prédéfinie et/ou est reconnue ou identifiée ou détectée ou autrement établie comme similaire (e.g. par l'utilisation de critères et/ou de seuils), l'hypothèse de position est conservée et d'autres étapes poursuivent les tests de validation de l'hypothèse (e.g. démodulation, mesures TOA/FOA). D'autres points de rejets ultérieurs peuvent survenir (par exemple le nombre d'erreurs binaires lors du décodage du code BCH notamment pour la démodulation dans Cospas-Sarsat). Dans les cas où la présence ou l'absence d'une caractéristique prédéfinie et/ou connue n'est pas établie de manière certaine (e.g. intervalle ou taux de confiance limite ou insuffisant), le signal est comparé par rapport à du bruit blanc de manière à constater un signal utile (par exemple au moyen de seuils et de compromis entre probabilité de détection - e.g. capacité à valider un signal reçu à faible rapport signal à bruit - et probabilité de fausse alarme - e.g. risque de réaliser le traitement des tests sur du bruit.

Dans un mode de réalisation particulier, il est divulgué un procédé mis en œuvre par ordinateur pour le traitement du signal émis par une balise de détresse, ledit signal étant reçu par plusieurs satellites et retransmis à une ou plusieurs stations au sol, le procédé comprenant les étapes consistant à générer une grille de positions de la balise de détresse, chaque point de la grille représentant une hypothèse de position de la balise; sommer les signaux décalés des satellites en chaque point de ladite grille de positions; et déterminer la validité de chaque somme des signaux décalés en fonction de la présence ou de l'absence d'une caractéristique prédéfinie dans le signal émis.

Plusieurs étapes sont combinées selon le procédé: une recherche "vectorielle" est mise en œuvre sur une "grille de positions" (i.e. positions candidates ou potentielles) de la balise de détresse, cette recherche étant effectuée sur l'intégration dite "cohérente" (i.e. par sommation des signaux décalés relatifs des satellites), et "valide" (i.e. au moyen de la recherche et de l'identification de la présence d'une caractéristique prédéfinie contenue dans le signal émis par la balise de détresse), des signaux des différents satellites en chaque point de l'ensemble des positions hypothétiques (e.g. la "grille de positions" telle que définie).

Dans un développement, l'étape consistant à décaler le signal d'un satellite comprenant une étape consistant à décaler temporellement le signal dudit satellite par un temps égal à l'opposé du temps de propagation balise-satellite-station.

Le temps de propagation correspond au temps de parcours total du signal de détresse, c'est-à-dire au temps de parcours de la distance entre la position hypothétique de la balise de détresse et le satellite, additionné au temps de parcours de la distance entre le satellite et la station de réception. Ce parcours s'effectue à la vitesse de transmission d'un signal électromagnétique, soit sensiblement à la vitesse de la lumière dans le vide.

Dans un développement, l'étape consistant à décaler le signal d'un satellite comprenant une étape consistant à décaler en fréquence le signal du satellite par une fréquence égale à l'opposé de l'effet Doppler.

L'effet Doppler est associé au déplacement relatif du satellite par rapport à la position hypothétique de la balise de détresse et par rapport au déplacement relatif du satellite par rapport à la station de réception.

Dans un développement, l'étape consistant à décaler le signal d'un satellite comprenant une étape consistant à décaler en puissance le signal par une puissance égale à l'opposé de l'atténuation de puissance mesurée pour ledit satellite.

L'atténuation de puissance est déterminée par (a) les pertes de bilan de liaison entre la position hypothétique de la balise de détresse et le satellite et par (b) les pertes de bilan de liaison entre le satellite et la station de réceptions, les pertes de bilan de liaison étant essentiellement constituées des pertes d'espace libre, lui-même dépendant (i) de la distance et dépendant (ii) des gains d'antenne à l'émission et à la réception, lesdits gains d'antenne dépendant à leur tour de l'élévation et de l'azimut d'émission et de réception.

Dans la mesure où l'orbite des satellites peut être suffisamment bien déterminée, il est également envisageable de corriger la phase d'arrivée. Ce développement reste entièrement optionnel (l'estimation de validité de la somme est faite de manière non-cohérente, c'est-à-dire en supposant que les phases sont différentes).

Dans un développement, une caractéristique du signal émis comprend la présence d'une porteuse pure, et la validité de la somme des signaux décalés des satellites est déterminée par l'apparition d'une raie dans la transformée de Fourier du signal sommé.

Dans ce cas particulier, pour lequel le signal commence par de la porteuse pure, il est possible ne pas compenser le retard mais seulement le Doppler puisqu'un pic de FFT (Fast Fourier Transform) survient dès que le Doppler est bien corrigé.

Dans un développement, le signal émis comprend en outre la présence d'un signal de synchronisation, et la validité de la somme des signaux décalés des satellites est déterminée par corrélation entre le signal sommé et une réplique dudit signal de synchronisation.

Le signal émis par la balise de détresse peut comprendre un "signal" de synchronisation (par exemple et dans un cas particulier un "mot" de synchronisation). Dans un mode de réalisation avantageux, le signal de synchronisation possède les mêmes propriétés que le signal utile qui suit (même modulation par exemple).

Plusieurs modulations du système "Search and Rescue" S.A.R. sont possibles. La modulation actuelle prévoit une porteuse puis le message, le message commençant par une séquence prédéfinie. La modulation dite « nouvelle génération » prévoit le message directement mais avec une séquence prédéfinie et connue au début de l'émission du signal et avec un code d'étalement. Une telle séquence est un marqueur, utile et avantageux pour la validité de l'étape d'intégration cohérente. Dans le cas de la modulation par porteuse pure, une composition est considérée valide si la sommation cohérente fait se matérialiser graphiquement une raie dans le domaine fréquentiel. Le signal émis par la balise de détresse peut comprendre une portion de message prédéfini marquant le début de l'émission. Dans le cas où le signal émis comprend un marqueur prédéfini (i.e. connu a priori), une composition est considérée comme valide si la corrélation avec la portion de message prédéfini fait se matérialiser graphiquement une raie dans le domaine temps/fréquence. En d'autres termes, il pourra apparaître un "pic" lors d'une recherche de synchronisation dans les domaines fréquentiel et temporel.

Ce développement correspond aux signaux dits de "Search-And-Rescue". Il est d'abord vérifié s'il y a une raie et s'il y a une raie il est procédé à la recherche du mot de synchronisation. Ce développement procure les meilleures performances opérationnelles. En particulier, la recherche de corrélation permet d'éliminer les détections sur des raies parasites liées à des interférences, et la recherche de la raie avant la recherche de corrélation permet de réduire l'incertitude de fréquence et donc de tenir des complexités de calcul compatible d'une implémentation temps réel.

Dans un développement, la corrélation est obtenue pour un décalage temporel et fréquentiel particulier entre ledit signal obtenu par la somme des signaux décalés des satellites et la réplique du mot de synchronisation.

La recherche du décalage temporel et fréquentiel particulier peut être réalisée par le calcul de la corrélation pour chaque position de l'ensemble des positions hypothétiques comprenant un décalage temporel et un décalage fréquentiel (i.e. sans lien direct avec la position hypothétique de la balise de détresse)

Le procédé comprend la définition d'un ensemble de positions hypothétiques de la balise de détresse. Par itération, il est considéré une position hypothétique particulière. Pour cette position, les signaux de chaque satellite sont décalés en temps et en fréquence, en fonction précisément de la position hypothétique considérée, ainsi que des délais et décalages Doppler associés à la propagation du signal. Ces signaux modifiés sont sommés. Par exemple, en nommant s1, s2, s3, et s4 les signaux sur quatre satellites et f(s,p) la fonction de décalage du signal s selon la position hypothétique p, le signal sommé résultant S sera S(p) = f(s1,p) + f(s2,p) + f(s3,p) + f(s4,p). Dans ce signal sommé S, il est recherché ou testé ou évalué si S(p) contient un signal intelligible, e.g comprenant un signal connu. Pour ce faire, une méthode consiste à corréler S(p) avec une réplique du mot de synchronisation. Si S(p) et la réplique sont bien alignés en fréquence et en temps, la corrélation va être forte et il va être observé une valeur élevée de celle-ci, ce qui qui va permettre de valider l'hypothèse de position p. Cependant, dans le cas général, S(p) et la réplique ne seront pas alignées car la date et la fréquence d'émission du signal ne sont pas connues. Pour prendre en compte la non-connaissance de la date d'émission et de la fréquence d'émission, une grille ("régulière") de décalages peut être créée (décalage temps d'émission, décalage fréquence d'émission), et par suite il pourra être calculé la corrélation avec la réplique pour chacun des points de cette grille. La somme S(p) sera valide si un point de cette grille est identifié, point pour lequel la corrélation avec la réplique est élevée. Incidemment, la connaissance et la manipulation de S(p) est seule requise (l'information de position n'est plus nécessaire). Itérativement donc, la position de la balise de détresse peut être déterminée.

Ce mode de réalisation particulier est avantageux pour les méthodes d'élaboration de la validité de l'intégration cohérente (e.g. somme des signaux décalés). La grille temps/fréquence correspond aux deux inconnues, la "date d'émission du message" et la "fréquence d'émission du message". L'incertitude sur ces éléments n'empêche pas la reconstruction cohérente par le processus de pré-compensation délai et décalage Doppler d'après la grille de position, par contre s'ils ne sont pas correctement estimés/connus, ils peuvent perturber les processus de recherche de validité.

Dans un développement, une caractéristique du signal émis est obtenue par la combinaison d'un message initial et d'un code d'étalement, et la validité de la somme des signaux décalés des satellites est déterminée par corrélation entre le signal sommé et une réplique du code d'étalement.

Dans un développement, la corrélation est déterminée pour un décalage temporel et fréquentiel particulier entre le signal sommé et la réplique du code d'étalement.

Dans un développement, le procédé comprend en outre, pour chaque satellite, une étape consistant à déterminer un décalage temps et un décalage fréquence maximisant la corrélation entre le signal reçu depuis ce satellite et le signal sommé correspondant à la somme des signaux décalés des satellites déterminée comme étant valide.

Dans ce développement, il est avantageux de pouvoir évaluer les mesures de décalages temps et fréquence sans avoir fait la démodulation et reconstruit la réplique. C'est moins précis (parce que la réplique est faite sans bruit, alors que l'intégration cohérente a toujours un résidu de bruit), mais cela fonctionne aussi, et cela peut notamment permettre de faire une localisation même si le contenu binaire n'a pas pu être démodulé. Selon ce développement, pour chaque satellite est donc déterminé un couple comprenant un décalage temps et un décalage fréquence.

Dans un développement, le procédé comprend en outre, pour chaque somme de signaux décalés des satellites déterminée comme étant valide, une étape consistant à déterminer le contenu binaire du signal émis par la balise, relayé par les satellites et reçu par la station.

La démodulation ne fait pas à proprement parler partie de l'intégration cohérente satellite.

Dans un développement, le procédé comprend en outre, pour chaque somme de signaux décalés des satellites déterminée comme étant valide, après l'étape de consistant à déterminer le contenu binaire du signal émis par la balise, une étape consistant à construire une réplique digitale en bande de base du signal émis par la balise de détresse.

Pour la reconstitution du signal émis par la balise de détresse, il n'est pas besoin de connaître le milieu de propagation pour refaire ce dernier "à l'envers" et déterminer les distorsions. Il s'agit ici d'une reconstruction « en bande de base ». Il s'agit de construire un signal modulé sans décalage de porteuse.

Dans un développement, le procédé comprend en outre pour chaque satellite une étape consistant à déterminer un décalage temps et un décalage fréquence maximisant la corrélation entre le signal reçu depuis ce satellite et la réplique digitale après une étape consistant à démoduler la composition cohérente.

La "réplique digitale" correspond au signal émis par la balise tel que reconstitué après l'intégration cohérente. L'expression "depuis ce satellite" signifie "relayé par le satellite considéré et envoyé à la station au sol". Dans le système MEOSAR, le signal ne subit aucun traitement dans le satellite avant d'être renvoyé à la station.

En simplifiant, sont effectuées des comparaisons, au sol, entre le signal émis reconstitué (à partir du signal issu de l'intégration cohérente multi-satellites), avec successivement chacun des signaux réels isolés reçus par chaque satellite pris individuellement.

Pour chaque satellite est donc déterminé un couple (décalage temps; décalage fréquence).

Les décalages en temps et en fréquence évalués ici correspondent à des résidus par rapport à ceux considérés lors de la création de la somme valide des signaux décalés. Pour la "vraie" position de la balise, pour un satellite donné, le décalage (en temps et/ou fréquence) est noté D. Pour le point de la grille de position le plus proche de la position vraie de la balise, un décalage D1 a été utilisé. En prenant un pas de grille assez petit, l'écart entre D1 et D a été suffisamment faible pour que l'intégration cohérente, la recherche de validité sur celle-ci, et la démodulation, aient des pertes acceptables. Cependant, l'étape du traitement la plus exigeante vis-à-vis de la mesure de D est l'étape de localisation précise de l'émetteur. Il peut donc arriver que cet écart entre D1 et D soit trop grand pour évaluer précisément la localisation (processus le plus dépendant de la précision de mesure), et il y aura alors besoin d'une mesure plus précise de D. Lorsqu'on a construit la somme en pré-compensant le décalage, le signal satellite a été décalé de D1, de sorte que le signal de référence (celui directement issu de la somme des signaux décalés ou le signal réplique) utilisé pour la mesure de "décalage temps, décalage fréquence" est déjà décalé de D1. Ainsi, la recherche de corrélation entre le signal satellite et le signal de référence va donner une valeur de décalage résiduel D2, et ce qui sera utilisé pour la localisation comme estimé au mieux de D sera égal à la somme de D1 et de D2.

Dans un mode de réalisation particulier, les mesures de temps et/ou de fréquence peuvent être initialisées à partir des mesures préliminaires réalisées précédemment décrites (e.g. décalage temporel du signal satellite par un temps égal à l'opposé du temps de propagation balise-satellite-station et/ou décalage en fréquence du signal du satellite par une fréquence égale à l'opposé de l'effet Doppler).

Dans un développement, le procédé comprend en outre une étape consistant à déterminer la localisation de la balise de détresse, ladite localisation minimisant le résidu pondéré des décalages temps, ou le résidu pondéré des décalages fréquence, ou le résidu pondéré combiné des décalages temps et des décalages fréquences entre les satellites.

La minimisation des résidus pondérés peut être déterminée au moyen de l'emploi de l'algorithme de Gauss-Newton. Des mesures en temps et en fréquence sont combinées. Selon la forme d'onde (en particulier), l'un ou l'autre du temps ou de la fréquence sera associé à un intervalle de confiance supérieur. Certains satellites peuvent présenter des mesures plus ou moins bonnes.

Dans un développement, le procédé comprend en outre une étape consistant à calibrer une antenne active ou un réseau d'antennes en fonction de la localisation de la balise de détresse.

Dans un développement, le procédé comprend en outre une étape consistant à créer un bulletin d'alerte comprenant le contenu démodulé du signal émis par la balise et/ou la localisation déterminée de la balise de détresse.

Dans un mode de réalisation, le bulletin d'alerte peut comprendre le contenu démodulé du signal émis *et*/*ou* la localisation (si elle est déterminée par exemple). En d'autres termes, il est également possible de créer un bulletin d'alerte ne comprenant que le seul contenu démodulé (pour des traitements ultérieurs ou tiers par exemple), i.e. sans la détermination de la localisation de la balise (qui reste donc une caractéristique facultative à ce stade du procédé).

Dans un développement entièrement facultatif, le procédé comprend au préalable une étape consistant à retirer la contribution de la voie descendante entre le satellite et la ou les stations au sol.

L'opération visant à "décaler le signal reçu d'un satellite" consiste à compenser la voie dite montante (de la position de la balise au satellite) et la voie dite descendante (du satellite à la station au sol). Puisque la voie descendante ne dépend pas de la position de la balise, il est possible de mettre en commun le calcul de sa contribution sur l'ensemble des positions hypothétiques. Ce mode de réalisation est avantageux pour les calculs.

En particulier, ce retrait de contribution de voie descendante peut s'effectuer avant l'application de la recherche sur les points de la grille de positions hypothétiques de la balise de détresse. Ce développement (optionnel) correspond à une optimisation des calculs. Dans un mode de réalisation simple, les délais et valeurs de décalage Doppler sont retirés de l'ensemble du trajet (de la balise au satellite, puis du satellite à la station). En pratique, pour tous les points de la grille, le trajet du satellite à la station pourra être sensiblement le même, donc de nombreux calculs peuvent s'avérer superflus. Le présent développement propose de retirer les contributions du trajet du signal du satellite à la station une fois pour toute, pour ensuite concentrer les ressources de calcul sur ce qui dépend uniquement de la position de la balise.

Dans un développement, l'ensemble des positions hypothétiques de la balise de détresse est réduit aux positions visibles depuis les satellites visibles depuis la station de réception.

En particulier, le pas de la grille de positions attendues de la balise de détresse peut être optimisé (réduction de l'espace de recherche)

La détermination de la localisation de la balise de détresse permet, entre autres, d'anticiper ou de surveiller une nouvelle émission de la balise de détresse.

Il est divulgué un produit programme d'ordinateur, ledit programme d'ordinateur comprenant des instructions de code permettant d'effectuer une ou plusieurs étapes du procédé, lorsque ledit programme est exécuté sur un ordinateur.

Il est divulgué un système pour la localisation d'une balise de détresse, le système comprenant des moyens pour mettre en œuvre une ou plusieurs étapes du procédé.

Dans un développement, le système comprend au moins une antenne active ou un réseau d'antennes.

Selon un aspect de l'invention, un réseau d'antennes (optionnel) est utilisé en combinaison avec un traitement parallèle multi-satellites. En particulier il est procédé à un "rebouclage" des résultats de traitement sur la calibration du réseau d'antenne.

Entre autres avantages, le procédé permet le traitement simultané de l'ensemble des satellites visibles, sans impact de coût significatif sur les modifications apportées aux antennes. À l'inverse, la chaîne de traitement du signal est améliorée. La calibration du réseau d'antennes peut être optimisée. De manière générale, chaque segment où étapes de la chaîne de traitement contribue ainsi à l'optimisation et l'amélioration des autres.

Les avantages du procédé et du système décrit comprenne des améliorations de la performance et des optimisations de coût. Le procédé permet d'envisager un gain théorique de 10 ^{∗} log(N) où N est le nombre de satellites visibles. Pour N = 30, le gain atteint 14 DB. Un l'objectif à 10 dB pertes incluses peut donc être légitimement envisagé. L'implémentation de la méthode peut s'effectuer à coût réduit pour l'adaptation de la station MEOLUT (réseau d'antennes, et adaptations logicielles).

La complexité logicielle (et également matérielle pour ce qui concerne la RF du réseau d'antenne) sont en effet aisément surmontables. Des expérimentations Matlab sur des processeurs mono-cœur indique qu'un traitement (sans optimisation particulière) est à moins d'un facteur 10 du temps réel. Une implémentation en C++ sur des serveurs de calcul sera avantageuse. En matière d'antennes, le nombre visé de satellites (de l'ordre la cinquantaine) reste faisable pour un industriel (les systèmes actuels comptent jusqu'à 200 éléments).

La présente divulgation présente plusieurs intérêts connexes. Selon un aspect, les étapes décrites peuvent être combinées entre elles, soit « vers l'avant », de manière à enrichir progressivement l'estimation de la position, soit « vers l'arrière », de manière à utiliser la position finale de la balise pour recaler vrai le réseau. De fait, un mécanisme intégré de gestion de la qualité des mesures devient également possible. Le procédé permet également le suivi des écarts à l'attendu. Il permet également la détection de brouilleurs formés. Enfin, le procédé permet des re-calculs sur les données accumulées (facilité de retour dans le passé).

### Description des figures

Différents aspects et avantages de l'invention vont apparaitre en appui de la description d'un mode préféré d'implémentation de l'invention mais non limitatif, avec référence aux figures ci-dessous :
La figure 1 illustre le fonctionnement général des méthodes existantes pour la localisation d'une balise de détresse;
La figure 2 schématise l'optimisation multivoies selon l'invention et présente diverses optimisations associées.

### Description détaillée de l'invention

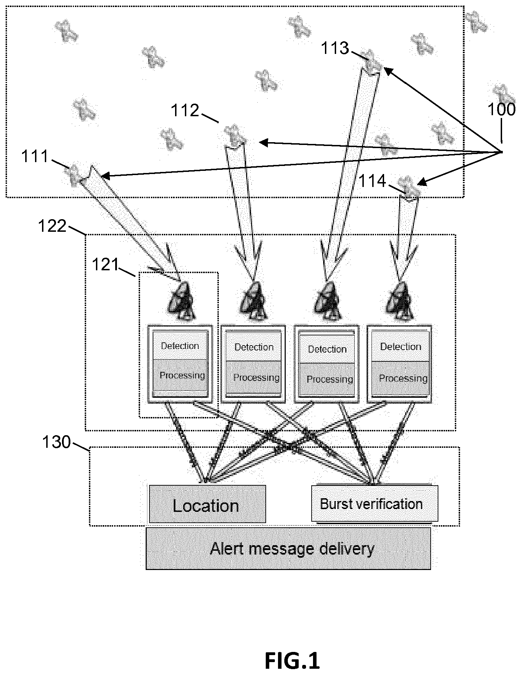

La figure 1 illustre le fonctionnement général des méthodes existantes pour la localisation d'une balise de détresse. Une balise 100 émet un signal électromagnétique, lequel est reçu par quatre satellites 111, 112, 113 et 114, parmi une constellation de satellites. Ces quatre satellites retransmettent le signal de détresse aux stations au sol. La station au sol MEOLUT 122 est composée de stations de type LEOLUT 121. Aujourd'hui, une dizaine environ de stations MEOLUT 122 est déployée dans le monde. Une LEOLUT 121 est associée avec une antenne et ne voit qu'un seul satellite. Chaque station LEOLUT réalise quatre mesures successives de FOA (time of arrivai, frequency of arrivai), avec une mesure doppler (qui est fort aux basses altitudes). Avec quatre stations LEOLUT formant une MEOLUT, la balise est localisée (la position des satellites est connue à chaque instant), avec un seul « burst ».

Selon l'état de la technique, ces différentes stations 121 n'agissent pas de concert. Les voies de traitement sont indépendantes. L'architecture est séparée ou compartimentée, avec une chaîne de détection et de traitement propre à chaque antenne, les chaînes de traitement étant séparées non seulement en termes logiciels mais aussi le plus souvent en termes matériels. L'architecture existante est principalement dimensionnée sur le nombre d'antennes (en raison du coût significatif des antennes). De plus, sur la trentaine de satellites potentiellement adressables, seuls quatre peuvent actuellement être utilisés simultanément.

Selon un premier aspect de l'invention, la partie antennaire est améliorée (du fait de l'utilisation d'un réseau d'antennes), cette caractéristique demeurant néanmoins optionnelle. Cette solution permet d'adresser la totalité ou un nombre très supérieur de satellites appartenant à la constellation. En pratique, ce réseau d'antennes peut voir la trentaine de satellites de la constellation.

Selon un second aspect de l'invention, en combinaison avec l'utilisation du réseau d'antennes (optionnel), le traitement du signal fait l'objet d'une coopération entre les différentes stations LEOLUT 121. En d'autres termes, un aspect de l'invention prévoit une optimisation multivoies.

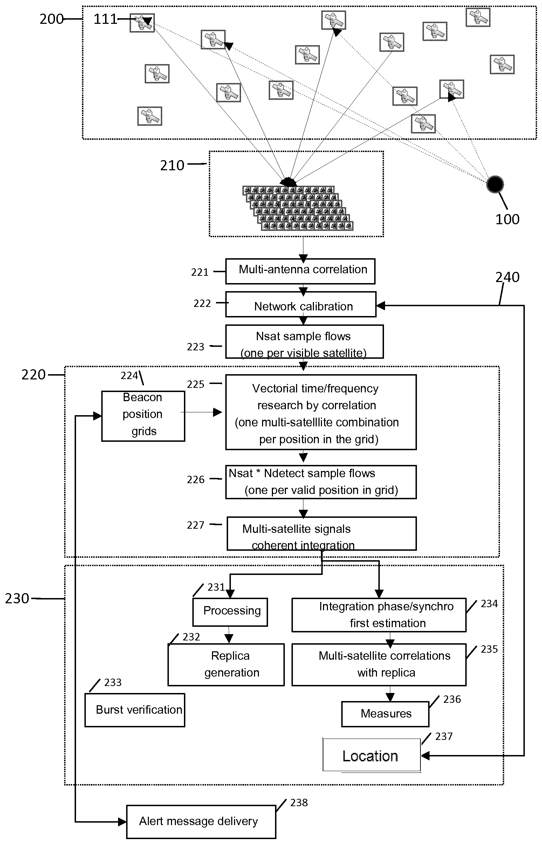

La figure 2 schématise l'optimisation multivoies selon l'invention.

Le procédé décrit généralement une corrélation multi-antennes pour le suivi des satellites GNSS. au moyen d'un réseau d'antennes optionnelles, une recherche vectorielle est effectuée. A l'étape 220 est mise en œuvre une recherche vectorisée d'après une grille de positions attendues (pas typique de 2° x 2°) pour vérifier la présence d'une émission SAR par recombinaison des signaux obtenus sur les différents satellites visibles du point de la grille et de la MEOLUT. A l'étape 230, la recherche vectorisée est utilisée comme point d'entrée de la mise en œuvre d'une intégration cohérente multi-satellites. A l'étape 232, le signal intégré est traité. Il en est déduit une réplique idéale, puis sont construites des mesures TOA/FOA à partir d'une nouvelle itération de corrélations sur cette réplique idéale. A l'étape 238, un bulletin d'alerte est produit. A l'étape 240, la localisation finalement obtenue (ainsi éventuellement à la fonction de recherche vectorisée pour anticiper la présence de la prochaine émission de la même balise) est retransmise à la chaîne de calibration antenne. En d'autres termes il est procédé à l'intégration par rebouclage des résultats des localisations sur les balises traitées à fin de recalibrer en continu le réseau.

Une « antenne active » ou « réseau d'antennes » 210 est un ensemble d'antennes séparées et alimentées de façon synchrone (le déphasage du courant entre deux paires d'antennes est fixe). Le champ électromagnétique produit par un réseau d'antennes est la somme vectorielle des champs produits par chacun des éléments. En choisissant convenablement l'espacement entre les éléments et la phase du courant qui circule dans chacun, on peut modifier la directivité du réseau grâce à l'interférence constructive dans certaines directions et à l'interférence destructive dans d'autres directions. L'intérêt de ce type de réseau est qu'il est possible de changer la direction dans laquelle "tire" l'antenne en quelques microsecondes (au lieu de secondes ou dixièmes de secondes, qui seraient nécessaires pour orienter mécaniquement une parabole). "Plusieurs cibles peuvent être simultanément surveillées. Un autre avantage associé à ce type d'antenne réside dans le fait que ces systèmes travaillent à puissance relativement réduite.

Dans une étape 220, il est procédé à une recherche « vectorielle » sur une grille de positions, puis à une étape d'intégration cohérente 230.

Pour déterminer la localisation de la balise, il est en effet procédé par itération sur une grille, selon un mode de recherche dite «vectorielle» 220.

Le pas de la grille peut être optimisé de différentes façons (l'espace de recherche peut être restreint connaissant les satellites visibles de la balise et de la station, par exemple en excluant les zones des pôles terrestres). Seul le domaine possible est parcouru. L'ensemble des combinaisons possibles est testé (décalages en fréquence et en temps). Il est donc procédé à une recherche sur une grille de positions. Restent encore deux inconnues: la date et la fréquence du «burst». En procédant par hypothèses, via plusieurs satellites, les signaux sont recombinés par intégration cohérente multi-satellites.

Dans une première étape, une grille de position et parcourue. Pour chaque point de la grille, les dopplers et les délais différentiels sont calculés (pour chaque satellite), et une composition (temps/fréquence) correspondante est créée. Si on trouve la présence - à une certaine fréquence et à une certaine date - d'une composition, on la valide.

Dans une deuxième étape, pour chaque composition valide, le signal et démodulé, puis une réplique digitale du burst est créée (i.e. sans bruit additionnel).

Dans une troisième étape, pour chaque satellite, sont recherchés le décalage temps et le décalage fréquence qui maximisent la corrélation avec la réplique. Ces décalages permet de trouver la localisation précise de la balise. En d'autres termes, un signal recombiné cohérent est reconstitué et ce signal recombiné est varié en temps et en fréquence. Ces variations sont comparées avec les signaux réels, de manière à améliorer la précision de la localisation de la balise.

L'information issue de la pluralité de satellites amoindrit la précision de la localisation de la balise et une étape de calcul itérative de parcours sur la grille permet de localiser plus précisément la balise. Si la finesse de la grille n'est pas suffisante, des *"bursts"* peuvent être manqués.

Chaque satellite reçoit le même signal depuis la balise. En supposant que la position de la balise de détresse soit connue, tous les *dopplers* sont connus, et il est donc possible de sommer de manière cohérente les signaux et le bilan est amélioré (le signal est 4 fois plus fort). Combiner les signaux sur tous les satellites pour améliorer le signal. Cette opération peut être avantageusement effectuée sur tous les satellites adressables ou sur la plus grande partie possible d'entre eux (ce qui est réalisé quand un réseau d'antennes est utilisé).

Une étape de calibration optionnelle 240 permet d'optimiser la calibration du réseau d'antennes de manière continue. A un satellite correspond un élément antennaire. S'il existe des décalages de phase pour un élément antennaire, il sera possible de recaler cet élément (par exemple la phase sera modifiée de quelques degrés, de manière logicielle). Toutes les antennes se dérèglent généralement au fur et à mesure du temps. Chaque détection de balise fournit donc l'occasion de recalibrer les éléments antennaires.

Les différentes étapes de la méthode peuvent être combinées entre elles, i.e. mises en œuvre de manière synergétique. Les étapes de détection vectorielle 220, de combinaison cohérente 230, de localisation finale 237 et de calibration antenne 240 sont liées à la localisation de la balise.

Lors des étapes de détection vectorielle, de combinaison cohérente puis de localisation finale, il est procédé à l'estimation de plus en plus fine de la position et des caractéristiques d'émission (temps, fréquence) de la balise, ce qui va réduire l'incertitude, les ambiguïtés, les fausses alarmes et le temps de calcul pour les étapes successives. A l'inverse, la localisation précise de la balise devra servir à la calibration a posteriori du réseau d'antennes (mise en évidence de la loi de correspondance entre les déphasages observés par la corrélation multi-antennes et l'origine géométrique du signal).

La méthode permet d'élaborer un mécanisme intégré de gestion de la qualité des mesures, qui peut notamment se traduire par une réduction des fausses alarmes (et donc une amélioration des performances par la réduction des seuils associés sur chaque étape du traitement) et la possibilité d'introduire un indice qualité. Par exemple, si l'étape de localisation finale conduit à une position de balise en dehors du domaine d'incertitude de l'intégration cohérente (c'est-à-dire que si la balise était effectivement là où elle est finalement localisée, l'intégration cohérente n'aurait pas pu fonctionner et le signal n'aurait pas pu être traité), le message peut être rejeté, ou du moins transmis avec une faible confiance.

Un autre avantage de la méthode réside dans le suivi des écarts à l'attendu. Par exemple, si dans une situation donnée, d'après la recherche vectorielle cinq satellites donnés devaient permettre une visibilité optimale de la balise (compte-tenu de leur position et de la position de la balise dans la grille), s'il s'avérait que l'un de ces 5 satellites ne contribuait absolument pas à la mesure, cela pourrait signifier soit qu'il y a une interférence commune entre la balise et uniquement ce satellite (à vérifier sur d'autres satellites et d'autres balises), soit une erreur de calibration de l'antenne sur ce satellite (à vérifier sur d'autres balises), soit enfin un problème au niveau du satellite. Dans le cas (notamment) où on observerait une dégradation de la contribution d'un satellite à la corrélation lors de la recherche vectorielle, une re-calibration spécifique sur celui-ci serait avantageusement effectuée (par exemple en revenant à une calibration antérieure qui fonctionnait alors bien et en la corrigeant - ou pas - de la variation de position connue par l'orbite du satellite).

Jusqu'aux étapes d'intégration cohérente, le traitement est généralement identique que ce soit dans le cadre d'un signal utile ou d'un brouilleur formé. L'essentiel de la fonction de localisation et de détection des brouilleurs est déjà inclus de manière native dans la MEOLUT. Les procédés divulgués peuvent permettre de repérer des brouilleurs relativement faibles (qui ne sauraient pas être détectées par une MEOLUT existante avec son traitement mono-voie).

L'approche vectorielle permet de manière efficace un retour dans le passé. A titre d'illustration, si un *burst* a été détecté à une date donnée, il est envisageable de revenir à l'émission précédente (50 secondes plus tôt par exemple) et de réduire très fortement les domaines de recherche vectorielle et d'intégration cohérente compte-tenu de la connaissance de la position de la balise afin de voir s'il est cette fois possible d'extraire le *burst* précédent qui a pu être manqué (ou de confirmer qu'il a bien été manqué).

Dans le cas d'un défaut de calibration satellite, les signaux peuvent aussi être stockés. Le cas échéant, une prochaine détection fiable sur ce satellite (sur un message fort de balise d'orbitographie par exemple) permet de recalibrer la voie antenne (et par exemple de retraiter à ce moment-là le signal intermédiaire).

Il est divulgué un procédé et un système permettant l'intégration de des traitements vectoriels (antenne, détection, traitement) dans une même chaîne sérialisée de MEOLUT. Sont également divulguées différentes mises en œuvre d'actions et de rétroactions des blocs de traitement les uns sur les autres. Les interférences et les fausses alarmes peuvent être gérées.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge.

## Revendications

1. Un procédé mis en œuvre par ordinateur pour le traitement du signal émis par une balise de détresse, ledit signal étant reçu par plusieurs satellites et retransmis à au moins une station au sol, le procédé comprenant les étapes consistant à:
déterminer un ensemble de positions hypothétiques de la balise de détresse; et
pour lesdites positions hypothétiques:
pour chaque satellite, décaler en temps et/ou fréquence le signal reçu et retransmis en fonction de ladite position hypothétique; ledit signal étant associé au trajet position hypothétique - satellite - station ;
décaler en temps le signal d'un satellite comprenant une étape consistant à décaler temporellement le signal dudit satellite par un temps égal à l'opposé du temps de propagation balise-satellite-station,
décaler en fréquence le signal d'un satellite comprenant une étape consistant à décaler en fréquence le signal du satellite par une fréquence égale à l'opposé de l'effet Doppler,
sommer par intégration cohérente les signaux décalés; et
évaluer la validité de la somme des signaux décalés en fonction de la présence dans ladite somme d'une caractéristique prédéfinie.

2. Procédé selon la revendication 1, l'étape consistant à décaler le signal d'un satellite comprenant une étape consistant à décaler en puissance le signal par une puissance égale à l'opposé de l'atténuation de puissance mesurée pour ledit satellite.

3. Procédé selon l'une quelconque des revendications précédentes, pour lequel une caractéristique du signal émis comprend la présence d'une porteuse pure, et dans lequel la validité de la somme des signaux décalés des satellites est déterminée par l'apparition d'une raie dans la transformée de Fourier du signal sommé.

4. Procédé selon l'une quelconque des revendications précédentes, pour lequel le signal émis comprend en outre la présence d'un signal de synchronisation, et pour lequel la validité de la somme des signaux décalés des satellites est déterminée par corrélation entre le signal sommé et une réplique dudit signal de synchronisation.

5. Procédé selon la revendication 4, pour lequel la corrélation est obtenue pour un décalage temporel et fréquentiel particulier entre ledit signal obtenu par la somme des signaux décalés des satellites et ladite réplique du mot de synchronisation.

6. Procédé selon l'une quelconque des revendications initiales, une caractéristique du signal émis étant obtenue par la combinaison d'un message initial et d'un code d'étalement, et la validité de la somme des signaux décalés des satellites étant déterminée par corrélation entre le signal sommé et une réplique du code d'étalement.

7. Procédé selon la revendication 6, la corrélation étant déterminée pour un décalage temporel et fréquentiel particulier entre le signal sommé et la réplique du code d'étalement.

8. Procédé selon l'une des revendications précédentes, comprenant en outre, pour chaque satellite, une étape consistant à déterminer un décalage temps et un décalage fréquence maximisant la corrélation entre le signal reçu depuis ce satellite et le signal sommé correspondant à la somme des signaux décalés des satellites déterminée comme étant valide.

9. Procédé selon l'une quelconque des revendications 1 à 8, comprenant en outre, pour chaque somme de signaux décalés des satellites déterminée comme étant valide, une étape consistant à déterminer le contenu binaire du signal émis par la balise, relayé par les satellites et reçu par la station.

10. Procédé selon la revendication précédente, comprenant en outre, pour chaque somme de signaux décalés des satellites déterminée comme étant valide, après l'étape de consistant à déterminer le contenu binaire du signal émis par la balise, une étape consistant à construire une réplique digitale en bande de base du signal émis par la balise de détresse.

11. Procédé selon la revendication précédente, comprenant en outre pour chaque satellite une étape consistant à déterminer un décalage temps et un décalage fréquence maximisant la corrélation entre le signal reçu depuis ce satellite et la réplique digitale après une étape consistant à démoduler la composition cohérente.

12. Procédé selon la revendication précédente, comprenant en outre une étape consistant à déterminer la localisation de la balise de détresse, ladite localisation minimisant le résidu pondéré des décalages temps, ou le résidu pondéré des décalages fréquence, ou le résidu pondéré combiné des décalages temps et des décalages fréquences entre les satellites.

13. Procédé selon la revendication 12, comprenant en outre une étape consistant à calibrer une antenne active ou un réseau d'antennes en fonction de la localisation de la balise de détresse.

14. Procédé selon la revendication la revendication 9 ou 12, comprenant en outre une étape consistant à créer un bulletin d'alerte comprenant le contenu démodulé du signal émis par la balise et/ou la localisation déterminée de la balise de détresse.

15. Procédé selon la revendication 1, comprenant au préalable une étape consistant à retirer la contribution de la voie descendante entre le satellite et la ou les stations au sol.

16. Procédé selon la revendication 1, l'ensemble des positions hypothétiques de la balise de détresse étant réduit aux positions visibles depuis les satellites visibles depuis la station de réception au sol.

17. Un produit programme d'ordinateur, ledit programme d'ordinateur comprenant des instructions de code permettant d'effectuer les étapes du procédé selon l'une
quelconque des revendications 1 à 16, lorsque ledit programme est exécuté sur un ordinateur.

18. Un système pour la localisation d'une balise de détresse, le système comprenant des moyens pour mettre en œuvre les étapes du procédé selon l'une quelconque des
revendications 1 à 16, ledit système comprenant au moins une antenne active ou un réseau d'antennes.

## Patentansprüche

1. Computerimplementiertes Verfahren zur Verarbeitung des Signals eines Notsignalsenders, wobei das Signal durch mehrere Satelliten empfangen und an mindestens eine Bodenstation weitergeleitet wird, wobei das Verfahren folgende Schritte beinhaltet:
Bestimmen einer Gruppe von hypothetischen Lokalisierungen des Notsignalsenders; und
für die hypothetischen Lokalisierungen:
für jeden Satelliten, Zeit- und/oder Frequenzverschieben des empfangenen und weitergeleiteten Signals angesichts der hypothetischen Lokalisierung; wobei das Signal der Bahn hypothetische Position-Satellit-Station zugeordnet ist;
Zeitverschieben des Signals eines Satelliten, beinhaltend einen Schritt des zeitlichen Verschiebens des Signals des Satelliten um eine Zeit gleich dem Gegenteil der Fortpflanzungszeit Sender- Satellit- Station,
Frequenzverschieben des Signals eines Satelliten, beinhaltend einen Schritt des Frequenzverschiebens des Signals des Satelliten um eine Frequenz gleich dem Gegenteil des Dopplereffekts,
Summieren durch kohärente Integration der verschobenen Signale; und
Bewerten der Gültigkeit der Summe der verschobenen Signale angesichts des Vorhandenseins einer vorbestimmten Charakteristik in der Summe.

2. Verfahren nach Anspruch 1, wobei der Schritt des Verschiebens des Signals eines Satelliten einen Schritt beinhaltet, welcher darin besteht, das Signal um eine Leistung gleich dem Gegenteil der für den Satelliten gemessenen Leistungsdämpfung zu verschieben.

3. Verfahren nach einem der vorhergehenden Ansprüche, bei welchem eine Charakteristik des gesendeten Signals das Vorhandensein eines reinen Trägersignals beinhaltet, und bei welchem die Gültigkeit der Summe der verschobenen Signale der Satelliten durch Auftreten einer Linie in der Fourier-Transformation des summierten Signals bestimmt wird.

4. Verfahren nach einem der vorhergehenden Ansprüche, bei welchem das gesendete Signal zudem das Vorhandensein eines Synchronisationssignals beinhaltet, und bei welchem die Gültigkeit der Summe der verschobenen Signale der Satelliten durch Korrelation zwischen dem summierten Signal und einem Replikat des Synchronisierungssignals bestimmt wird.

5. Verfahren nach Anspruch 4, bei welchem die Korrelation durch eine besondere Zeit- und Frequenzverschiebung zwischen dem durch die Summe der verschobenen Signale der Satelliten erzielten Signal und dem Replikat des Synchronisierungswortes erzielt wird.

6. Verfahren nach einem der vorhergehenden Ansprüche, bei welchem eine Charakteristik des gesendeten Signals durch die Kombination einer anfänglichen Meldung und eines Spreizcodes erzielt wird, und die Gültigkeit der Summe der verschobenen Signale der Satelliten durch Korrelation zwischen dem summierten Signal und einem Replikat des Spreizcodes bestimmt wird.

7. Verfahren nach Anspruch 6, bei welchem die Korrelation für eine besondere Zeit- und Frequenzverschiebung zwischen dem summierten Signal und dem Replikat des Spreizcodes bestimmt wird.

8. Verfahren nach einem der vorhergehenden Ansprüche, zudem beinhaltend, für jeden Satelliten, einen Schritt des Bestimmens einer Zeitverschiebung und einer Frequenzverschiebung als gültig, welche die Korrelation zwischen dem von diesem Satelliten empfangenen Signal und dem summierten Signal maximieren, welches der Summe der verschobenen Signale der Satelliten entspricht.

9. Verfahren nach einem der Ansprüche 1 bis 8, zudem beinhaltend, für jede Summe von verschobenen Signalen der Satelliten, welche als gültig bestimmt wird, einen Schritt des Bestimmens des binären Inhaltes des durch den Sender gesendeten Signals, welches durch die Satelliten weitergeleitet und durch die Station empfangen wird.

10. Verfahren nach dem vorhergehenden Anspruch, zudem beinhaltend, für jede Summe von verschobenen Signalen der Satelliten, welche als gültig bestimmt wird, nach dem Schritt des Bestimmens des binären Inhaltes des durch den Sender gesendeten Signals, einen Schritt des Konstruierens eines digitalen Replikats im Basisband des durch den Notsignalsender gesendeten Signals.

11. Verfahren nach dem vorhergehenden Anspruch, zudem beinhaltend, für jeden Satelliten, einen Schritt des Bestimmens einer Zeitverschiebung und einer Frequenzverschiebung, welche die Korrelation zwischen dem von diesem Satelliten empfangenen Signal und dem digitalen Replikat nach einem Schritt der Demodulation der kohärenten Zusammensetzung maximieren.

12. Verfahren nach dem vorhergehenden Anspruch, zudem beinhaltend einen Schritt des Bestimmens der Lokalisierung des Notsignalsenders, wobei die Lokalisierung den gewichteten Rest der Zeitverschiebungen oder den gewichteten Rest der Frequenzverschiebungen, oder den gewichteten kombinierten Rest der Zeit- und der Frequenzverschiebungen zwischen den Satelliten minimiert.

13. Verfahren nach Anspruch 12, zudem beinhaltend einen Schritt des Kalibrierens einer aktiven Antenne oder eines Antennennetzwerks angesichts der Lokalisierung des Notsignalsenders.

14. Verfahren nach Anspruch 9 oder 12, zudem beinhaltend einen Schritt des Erstellens einer Alarmmitteilung, beinhaltend den demodulierten Inhalt des durch den Sender gesendeten Signals und/oder die bestimmte Position des Notsignalsenders.

15. Verfahren nach Anspruch 1, zuvor beinhaltend einen Schritt des Abziehens des Beitrags des Downlinks zwischen dem Satelliten und der oder den Bodenstation(en).

16. Verfahren nach Anspruch 1, wobei die Gruppe der hypothetischen Positionen des Notsignalsenders auf diejenigen Positionen reduziert wird, welche von von der Bodenempfangsstation aus sichtbaren Satelliten aus sichtbar sind.

17. Computerprogrammprodukt, wobei das Computerprogramm Code-Befehle beinhaltet, welche es ermöglichen, die Schritte des Verfahrens nach einem der Ansprüche 1 bis 16 durchzuführen, wenn das Programm auf einem Computer ausgeführt wird.

18. System zur Lokalisierung eines Notsignalsenders, wobei das System Mittel zum Umsetzen der Schritte des Verfahrens nach einem der Ansprüche 1 bis 16 beinhaltet, wobei das System mindestens eine aktive Antenne oder ein Antennennetzwerk beinhaltet.

## Claims

1. A method implemented by a computer for processing the signal emitted by a distress beacon, said signal being received by several satellites and forwarded to at least one ground station, the method comprising the steps consisting in:
determining a set of hypothetical positions of the distress beacon; and
for said hypothetical positions:
for each satellite, time and/or frequency offsetting of the signal received and forwarded as a function of said hypothetical position; said signal being associated to the path hypothetical position-satellite-station;
time offsetting of the signal from one satellite comprising a step consisting in offsetting the signal from said satellite temporally by a time that is equal to the opposite of the beacon-satellite-station propagation time,
frequency offsetting of the signal from one satellite comprising a step consisting in offsetting the signal from the satellite in terms of frequency by a frequency equal to the opposite of the Doppler effect;
summing the offset signals by coherent integration; and
evaluating the validity of the sum of the offset signals as a function of the presence of a predefined characteristic in said sum.

2. The method as claimed in claim 1, the step consisting in offsetting the signal from a satellite comprising a step consisting in offsetting the signal in terms of power by a power equal to the opposite of the power attenuation measured for said satellite.

3. The method as claimed in any one of the preceding claims, for which a characteristic of the emitted signal comprises the presence of a pure carrier, and in which the validity of the sum of the offset signals from the satellites is determined by the appearance of a line in the Fourier transform of the summed signal.

4. The method as claimed in any one of the preceding claims, for which the signal emitted further comprises the presence of a synchronization signal, and for which the validity of the sum of the offset signals from the satellites is determined by correlation between the summed signal and a replica of said synchronization signal.

5. The method as claimed in claim 4, for which correlation is obtained for a particular temporal and frequency offset between said signal obtained by summing the offset signals from the satellites and said replica of the synchronization word.

6. The method as claimed in any one of the initial claims, a characteristic of the emitted signal being obtained by combining an initial message and a spread code, and the validity of the sum of the offset signals from the satellites being determined by correlation between the summed signal and a replica of the spread code.

7. The method as claimed in claim 6, the correlation being determined for a particular temporal and frequency offset between the summed signal and the replica of the spread code.

8. The method as claimed in one of the preceding claims, further comprising, for each satellite, a step consisting in determining a time offset and a frequency offset that maximize the correlation between the signal received from this satellite and the summed signal corresponding to the sum of the offset signals from the satellites that is determined as being valid.

9. The method as claimed in one of claims 1 to 8, further comprising, for each sum of offset signals from the satellites which is determined as being valid, a step consisting in determining the binary content of the signal transmitted by the beacon, relayed by the satellites and received by the station.

10. The method as claimed in the preceding claim, further comprising, for each sum of offset signals from the satellites which is determined as being valid, after the step consisting in determining the binary content of the signal transmitted by the beacon, a step consisting in constructing a baseband digital replica of the signal transmitted by the distress beacon.

11. The method as claimed in the preceding claim, further comprising, for each satellite, a step consisting in determining a time offset and a frequency offset that maximize the correlation between the signal received from this satellite and the digital replica after a step consisting in demodulating the coherent composition.

12. The method as claimed in the preceding claim, further comprising a step consisting in determining the location of the distress beacon, said location minimizing the weighted residue of the time offsets, or the weighted residue of the frequency offsets, or the combined weighted residue of the time offsets and of the frequency offsets between the satellites.

13. The method as claimed in claim 12, further comprising a step consisting in calibrating an active antenna or an array of antennas as a function of the location of the distress beacon.

14. The method as claimed in claim 9 or 12, further comprising a step consisting in creating an alert bulletin comprising the demodulated content of the signal transmitted by the beacon and/or the determined location of the distress beacon.

15. The method as claimed in claim 1, comprising beforehand a step consisting in removing the contribution of the downlink between the satellite and the ground station or stations.

16. The method as claimed in claim 1, the set of hypothetical positions of the distress beacon being reduced to the positions visible from the satellites visible from the ground receiving station.

17. A computer program product, said computer program comprising code instructions enabling carrying out the steps of the method as claimed in any one of claims 1 to 16 when said program is executed on a computer.

18. A system for locating a distress beacon, the system comprising means for implementing the steps of the method as claimed in any one of claims 1 to 16, said system comprising at least one active antenna or an array of antennas.
